# EUROPEAN PATENT APPLICATION

(11) **EP 2 781 883 A2**
(43) Date of publication of application: **24.09.2014**
(21) Application number: 14152369.6
(22) Date of filing: 24.01.2014
(51) Int. Cl.: G01C 21/36, H04N 21/43

(54) **Method and apparatus for optimizing timing of audio commands based on recognized audio patterns**

(30) Priority: 20.03.2013 US 201313847886
(71) Applicant: HERE Global B.V., 5503 LB Veldhoven (NL)
(72) Inventor: Beaurepaire, Jerome, 10715 Berlin (DE); Beaurepaire, Philippe, 22400 Lamballe (FR)
(74) Representative: Nokia Corporation

(57) **Abstract**

An approach is provided for timing application information presentation based on audio patterns. The audio platform processes and/or facilitates a processing of one or more audio samples to determine a conversational state of one or more users. Next, the audio platform determines a timing for at least one presentation of application information on a device associated with at least one of the one or more users based, at least in part, on the conversational state.

## Description

### BACKGROUND

Service providers and device manufacturers (e.g., wireless, cellular, etc.) are continually challenged to deliver value and convenience to consumers by, for example, providing compelling network services. One area of interest has been the development of dynamic distribution of messages to users, where the distribution is sensitive to the user's preferences in a given context. For example, users may want to receive application information, for example, navigational directions. However, presentation of such application information is independent of user activity and may thus interrupt user activity. On the other hand, categorically unobtrusive application information presentation may prevent the user from receiving the presentation. As a result, service providers face significant challenges presenting information in a user-friendly manner.

### SOME EXAMPLE EMBODIMENTS

Therefore, there is a need for an approach for timing application information presentation based on audio patterns.

According to one embodiment, a method comprises processing and/or facilitating a processing of one or more audio samples to determine a conversational state of one or more users. The method also comprises determining a timing for at least one presentation of application information on a device associated with at least one of the one or more users based, at least in part, on the conversational state.

According to another embodiment, an apparatus comprises at least one processor, and at least one memory including computer program code for one or more computer programs, the at least one memory and the computer program code configured to, with the at least one processor, cause, at least in part, the apparatus to process and/or facilitate a processing of one or more audio samples to determine a conversational state of one or more users. The apparatus is also caused to determine a timing for at least one presentation of application information on a device associated with at least one of the one or more users based, at least in part, on the conversational state.

According to another embodiment, a computer-readable storage medium carries one or more sequences of one or more instructions which, when executed by one or more processors, cause, at least in part, an apparatus to process and/or facilitate a processing of one or more audio samples to determine a conversational state of one or more users. The apparatus is also caused to determine a timing for at least one presentation of application information on a device associated with at least one of the one or more users based, at least in part, on the conversational state. According to another embodiment, an apparatus comprises means for processing and/or facilitating a processing of one or more audio samples to determine a conversational state of one or more users. The apparatus also comprises means for determining a timing for at least one presentation of application information on a device associated with at least one of the one or more users based, at least in part, on the conversational state.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of originally filed claims 1-10, 21-30, and 46-48.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of timing application information presentation based on audio patterns, according to one embodiment;
FIG. 2 is a diagram of the components of the audio platform, according to one embodiment;
FIG. 3 is a diagram of the components of the time platform, according to one embodiment;
FIG. 4 is a flowchart of a process for timing application information presentation based on audio patterns, according to one embodiment;
FIG. 5 is a flowchart of a process for determining the conversational state, according to one embodiment;
FIG. 6 is a flowchart of a process for determining the timing window, according to one embodiment;
FIG. 7 is a flowchart of a process for determining the timing relative to the timing window, according to one embodiment;
FIGs. 8A-8C are diagrams of user interfaces utilized in the processes of FIG. 3, according to various embodiments;
FIG. 9 is a diagram of hardware that can be used to implement an embodiment of the invention;
FIG. 10 is a diagram of a chip set that can be used to implement an embodiment of the invention; and
FIG. 11 is a diagram of a mobile terminal (e.g., handset) that can be used to implement an embodiment of the invention.

### DESCRIPTION OF SOME EMBODIMENTS

Examples of a method, apparatus, and computer program for timing application information presentation based on audio patterns are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

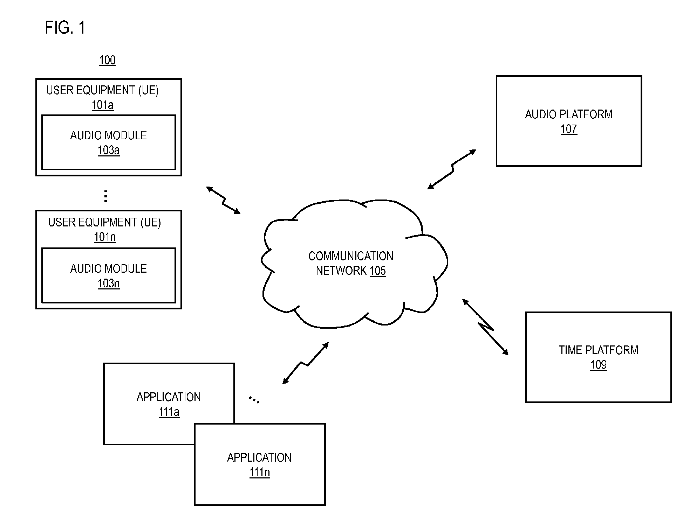

FIG. 1 is a diagram of a system capable of timing application information presentation based on audio patterns, according to one embodiment. One area of interest has been the development of dynamic distribution of messages to users, where the distribution is sensitive to the user's preferences in a given context. For example, users may want to receive information in different ways, depending on their particular situation. Currently, application information is largely presented when the information becomes available or relevant. For example, many applications involve giving navigational guidance, particularly, giving directions when a user is approaching a navigational maneuver. In one scenario, a navigational maneuver may include causing the user to turn at a particular intersection. A device may then announce to the direction to a user as the user approaches the intersection.

Currently, presentation of application information is static. For example, to provide navigation direction application information, an application may announce the navigation commands when a user is 5 miles from where the direction must occur, then at decreasing increments. The announcement may interrupt user activity or be obtrusive in the context of the user environment, for example, if the user is in the middle of a conversation or in a private, quiet area. The navigation commands may be set to "mute" when a user does not want to be disturbed, but then the user may miss important pieces of application information from being unaware of new navigation commands. Also, the user may switch to an environment where he can be disturbed, but forget to change the settings, and thus still miss the commands. As such, there is a need for dynamic timing of presentation of application information. Dynamic timing of presentation of application information may time presentation to be sensitive to a user's context. For example, a user's context may dictate that presentation at a certain time may be obtrusive or unwelcome. As such, presentation of application information that adapts to a user's context is useful to improve the user experience of receiving application information.

To address this problem, a system 100 of FIG. 1 introduces the capability to time application information presentation based on audio patterns, according to one embodiment. For example, the audio patterns may include conversation information, where the system 100 ensures that presentation of application information does not interrupt a conversation. In one embodiment, the system 100 may process one or more audio samples to determine a conversational state of one or more users and time at least one presentation of application information on a device associated with at least one of the one or more users based, at least in part, on the conversational state. For example, the system 100 may determine that a user is talking to another user. The processing of the audio samples may then determine an active conversational state and delay the presentation of application information until there is a gap in the conversation. The system 100 may identify the gap in conversation as a non-active conversational state.

One such scenario may include a user talking to a friend on the way to class. The system 100 may determine application information indicating a meeting notification. Rather than presenting the information immediately, the system 100 may delay presenting the notification until the user and friend pause in their conversation or part ways. For this, the system 100 may determine a conversational state at "inactive" when it no longer recognizes the user as engaged in conversation, and time the presentation to occur then.

In one embodiment, the application information may include navigation guidance information where the presentation is based on proximity to a navigation maneuver associated with the guidance information. For example, the system 100 may detect five miles in advance that a user must make a right turn. Where the user is in an active conversational state, system 100 may delay presenting announcing the turn to the user until either there is a gap in the conversation, or the user is less than 1 mile away from the turn. The system 100 may detect a set proximity to the navigation maneuver where the system 100 is respectful of the conversational state until the user is too proximate the navigation maneuver to not interrupt the conversation. In one instance, the system 100 may define a timing window as the time between where the navigation maneuver is first apprehended by the system 100 and the set proximity. In one embodiment, the presentation of the application takes user conversation into account, but ultimately, the presentation must occur within the timing window.

In one embodiment, the system 100 may include a presentation of a message indicating that a presentation of application information is available, but being delayed. For example, the system 100 may apprehend that a turn is needed in 5 miles but a user is actively conversing. The system 100 may then provide a visual indicator including, for example, a message box, a button or a light so the user may have notice to provide a gap in the conversation or end the conversation. In one scenario, one such message box may include a time mark showing the user that how long a presentation has been delayed. An exemplary message may read, "voice command on hold since 30 seconds."

In another embodiment, the system 100 may present a request that presents an option for user approval to initiate the presentation of application information. For example, a user may be in a heated conversation and not want to be interrupted even if he is nearing the set proximity where the system 100 would otherwise cause the presentation. The user in this embodiment would then have the option to not provide approval to initiate the presentation. Alternately, the user may be in deep thought or mourning and not want to be disturbed by the presentation, even where he is not in conversation. The option for approval would then give the user the choice to override the conversational state sensitivity of system 100.

In another embodiment, the system 100 may parse the content of an ongoing conversation to infer characteristics that may affect the presentation timing. For example, the system 100 may employ voice recognition, tone analysis, and/or word analysis to detect that a user is in deep thought or mourning, and adjust the presentation of application information accordingly. Other characteristics that may affect the presentation may include the user's mood, location, conversation content, conversation participants, or a combination thereof. For example, the system 100 may find a combination of characteristics indicating that the conversation is an argument between the user and his girlfriend. The system 100 may then adjust the presentation of application information to occur at more frequent intervals. Alternately, upon determining that a user is located in a library, the system 100 may delay presentation until the user is in a location where receiving audio commands is more acceptable.

In another embodiment, the system 100 may modify content of the presentation of application information based on timing of the presentation. For instance, a standard presentation may include the navigation maneuver, remaining distance, and location of geographical markers, as in, "Please turn right in 5 miles at First Street." As the user nears a navigation maneuver, the presentation may be abbreviated to, "Turn right." This way, if the first conversation gap occurs in close proximity to the navigation maneuver, the system 100 may simply announce, "Turn right."

In one embodiment, the system 100 may process audio samples to determine media playback information, ambient noise information, user activity information, or a combination thereof, where the timing of the presentation is further based on this processing. In one embodiment, media playback may include radio or music playing. In such an instance, the system 100 may time presentation of application information to coincide with commercials, downturns in music, or between music tracks so as to not interrupt a piece of music. For example, the system 100 may determine music metadata indicating slower parts of the music or bridges in music and cause presentation of application information in these segments, rather than during the chorus of a song.

In one embodiment, the system 100 may time presentation of application information by taking into account ambient noise information. For example, processing audio samples for ambient noise information may include distinguishing conversation audio from ambient noise. In one such scenario, ambient noise may not impact information presentation, but loud conversation (implying an argument) may cause system 100 to delay presentation. In another example, ambient noise may cause the system 100 to modify timing of the presentation in that system 100 may delay presentation where it detects low ambient noise since system 100 infers that the user is in a quiet place, such as a library or museum. User activity information may include determining user actions, including running, running errands, or eating. Again, system 100 may take consider this information to time the presentation of application information.

In a further embodiment, the system 100 may mute the conversation on the user's side and present the application information such that the presentation is heard by the user, but does not interrupt the conversation. For example, if the user reaches the point where the system 100 must deliver the presentation for the maneuver, the system 100 may automatically prompt the conversation to be muted on the user's end.

As shown in FIG. 1, the system 100 comprises user equipment (UE) 101a-101n (or UES 101) having connectivity to audio modules 103a-103n, an audio platform 107, a time platform 109, and applications 111a-111n via a communication network 105. By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

In one embodiment, the audio modules 103a-103n (or audio modules 103) may provide UEs 101 with audio functions, for example, audio communication. In one embodiment, the audio modules may detect audio exchanges or interaction between UEs 101 to infer conversation. In one embodiment, the audio modules 103 may collect audio samples from one or more users associated with one or more UEs 101. For example, the audio modules 103 may aggregate audio samples to enhance voice recognition functions. In addition, audio modules 103 may work in conjunction with the audio platform 107 to determine patterns in a particular user's audio samples. For example, a user may talk to another user particularly often, talk at unusually low volume, or have varying tempos of conversation depending on other participants in the conversation. This information may supplement the audio platform 107's understanding of a user's conversational states.

In one embodiment, the audio platform 107 may determine audio patterns, where timing presentation of application information is based on the audio patterns. For example, the audio platform 107 may determine conversational states of one or more users and prompt presentation when the audio platform 107 detects a gap in conversation. In another example, the audio platform 107 may process audio samples for information regarding media playback, ambient noise, user activity, or a combination thereof.

In one embodiment, the time platform 109 may determine a timing window in which the system 100 must present the application information via the audio module 103. In one embodiment, the time platform 109 determines the context of a given user or UE 101 relative to application information given by an application 111. For example, the application information may involve a command for a user to merge onto another road. Then, the command must be presented before the user reaches the ramp to merge. The time platform 109 may measure the timing window as the time and distance before a user reaches the ramp.

Applications 111 may provide application information, for example, commands or notifications for a user. In one embodiment, the applications 111 may include user interface displays for indicating that application information presentation is available, request permission to initiate presentation, or offer various versions of the application information for presentation. Displays indicating availability of application information presentation may include a light or a message notification signaling to the user that a presentation is pending. Applications 111 may also provide various means for the user to initiate presentation, offering, for example, options to skip presentation, "snooze" presentation, present immediately, etc. Applications 111 may also prepare various presentations or versions of presentations, where the presentation of the application information is chosen from one of the versions based on the timing of the presentation. For example, a presentation that is timed very close to the end of the timing window could be a much shorter, more concise form of the application information. In contrast, a presentation timed at the beginning of a timing window may be comprehensive application information.

By way of example, the UE 101, audio modules 103a-103n, an audio platform 107, a time platform 109, and applications 111a-111n communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

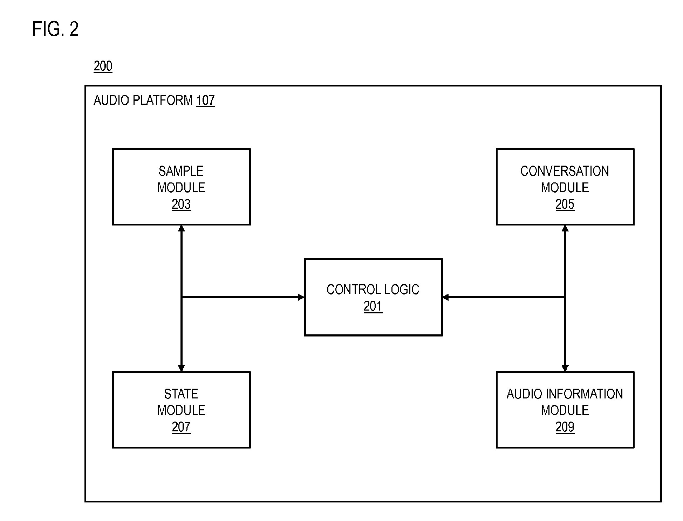

FIG. 2 is a diagram of the components of the audio platform 107, according to one embodiment. By way of example, the audio platform 107 includes one or more components for determining audio patterns. It is contemplated that the functions of these components may be combined in one or more components or performed by other components of equivalent functionality. In this embodiment, the audio platform 107 includes a control logic 201, a sample module 203, a conversation module 205, a state module 207, and an audio information module 209.

In one embodiment, the control logic 201 and sample module 203 receive audio samples from audio modules 103. In one embodiment, the control logic 201 may also prompt audio modules 103 to begin sampling. For example, the control logic 201 may interact with applications 111 to determine that application functions are active. Then, the control logic 201 may communicate with audio module 103 to initiate sampling of audio samples.

In one embodiment, the control logic 201 and conversation module 205 may process the audio samples to determine characteristics regarding the conversation. For example, the control logic 201 may determine interaction between one or more UEs 101, determine noise level, implement voice recognition, monitor the rate of speech, or a combination thereof. For example, the control logic 201 may receive an audio sample and note that the sample involves two voices, thus inferring a conversation. This means the control logic 201 may distinguish between multiple voices observed in an audio sample. The control logic 201 and conversation module 205 may also infer a conversation by surface or touch sensors, for example, when a phone user device is against someone's face. Another surface or touch cue to indicate a conversation may include the user manually pressing a button to pick up a call.

The control logic 201 may further implement voice recognition, comparing the detected voices against a database of voice samples, especially voice profiles associated with a given user. Then, the control logic 201 and conversation module 205 may determine the participants in a conversation. The control logic 201 and conversation module may further parse audio samples for content or acoustic characteristics, such as volume or tempo. For example, the audio sampling showing a decibel level above a pre-set level may imply an argument. Low volume may imply a private or sad tone. In another example, a rapid word rate or tempo may imply excitement or stress while slower rates may translate into a peaceful or melancholy mood. The control logic 201 and conversation module 205 may use various tools of audio sample analysis to determine characteristics regarding audio samples received from audio modules 203.

In one embodiment, the control logic 201 and state module 207 may then assign conversational states to the audio samples. For example, the control logic 201 and state module 207 may define profiles of characteristics as one or more conversational states. For instance, the control logic 201 may define a sample with a decibel level above 80 dB as being the conversational state, "active: angry." In contrast, the control logic 201 may define an audio sample with a decibel level below 50 dB as being at an "inactive" conversational state.

In one embodiment, the control logic 201 and state module 207 may further aggregate information regarding users' characteristics or patterns of talking and adjust inferences of conversational state based on these patterns. For example, by default, decibel level above 80 dB may cause the control logic 201 and state module 207 to recognize conversational state, "angry" by default. However, the control logic 201 may determine that a particular user consistently speaks at a level above 80 dB. Then, the control logic 201 and state module 207 may adjust the conversational state so that it no longer indicates an "angry" state where the control logic 201 is more hesitant to interrupt the conversation to present application information.

In another embodiment, the various conversational states may have levels regarding timing of presentations. As previously discussed, one embodiment is timing presentations to coincide with conversational states where users are not speaking, or gaps in conversation. In another embodiment, the control logic 201 and state module 207 may determine categories or tiers of conversations that may more easily be interrupted. For example, presentation timing may not be affected by "happy" conversational states, whereas a presentation timing may be delayed if the control logic 201 and state module 207 detect an "angry" conversational state.

In one embodiment, the control logic 201 and audio information module 209 may determine audio information in addition to audio samples provided by the audio modules 103. Audio information may include media playback information, ambient noise information, user activity information, or a combination thereof. In one embodiment, the audio information may be part of the audio samples. For example, the audio modules 103 may sample all the sound surrounding the UEs 101. In another embodiment, the audio information includes information separate or indirectly related to the audio samples, for example, regarding upcoming tracks in a media playlist. Media playback information may include radio or media played from various devices and ambient noise may include background noise. User activity information may include the user running, walking, interacting with other user devices, or a combination thereof.

In a further embodiment, the control logic 201 and audio information module 209 may determine patterns or changes in the audio samples. For example, the control logic 201 and audio information module 209 may identify patterns in conversations. For instance, the control logic 201 may determine conversational patterns characteristic to conversations between specific users (identified via voice recognition). One such scenario may include the control logic 201 identifying the pattern that user A is a parent and user B is a child. Conversations between user A and B typically last only 2-3 minutes and they occur in the afternoon around 3 or 4 pm since these conversations are simply to coordinate the parent picking the child up from school or soccer practice. The control logic 201 may also determine patterns depending on contextual information of the user (or UE 101 associated with the user), such as location. For example, user A tends to have long conversations while near work, but brief conversations proximate to his house.

In another embodiment, the control logic 201 and audio information module 209 may calibrate information processed by the interactions between the control logic 201 and state module 207. For example, a user may be speaking above 80 dB not because he is angry, but because ambient noise is especially high. In such a scenario, the control logic 201 and audio information module 209 may detect the high level of ambient noise and supply this information to the state module 207 analysis to inform the assignment of conversational states to audio samples.

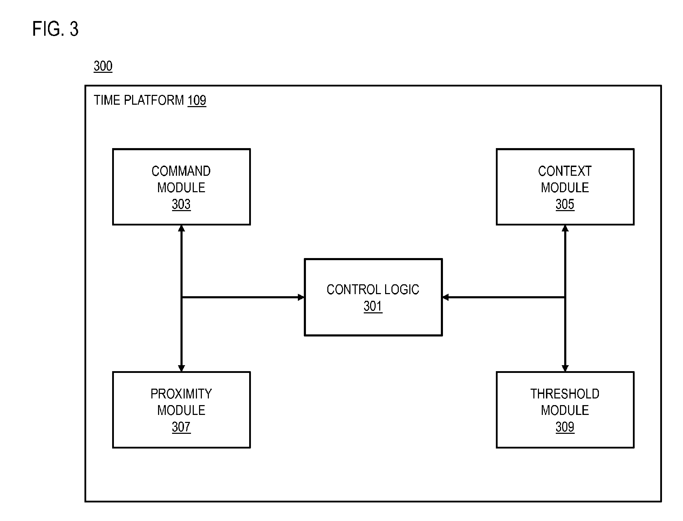

FIG. 3 is a diagram of the components of the time platform 109, according to one embodiment. By way of example, the time platform 109 includes one or more components for determining time windows. It is contemplated that the functions of these components may be combined in one or more components or performed by other components of equivalent functionality. In this embodiment, the time platform 109 includes a control logic 301, a command module 303, a context module 305, a proximity module 307, and a threshold module 309.

In one embodiment, the control logic 301 and command module 303 may interact with the applications 111 to determine application information to present. As previously discussed, the application information may involve navigation maneuvers associated with navigation guidance information. For example, such information may include directions to turn right or left, merge onto streets, exit off of streets, road conditions, etc. Application information from the applications 111 may include anything relating to information the application must alert the user to, in order for an application 111 to provide its service.

In one embodiment, the control logic 301 and context module 305 may determine the context of the UE 101 using an application 111. For example, the control logic 301 may determine the geographical coordinates of a UE 101. In one embodiment, the control logic 301 may use the geographical coordinates for location alone. In another embodiment, the control logic 301 and context module 305 may also determine context information including temperature, humidity, or lighting. For example, with lighting, the control logic 301 and context module 305 may determine that a user is approaching a city because the tall buildings obscure the sun. As such, the control logic 301 and context module 305 may supply information to cause more or less active presentation of application information.

In one embodiment, the control logic 301 and proximity module 307 may use the information gathered by the command module 303 and context module 305, to determine the context of the UE 101 relative to application information content. For example, the control logic 301 and proximity module 307 may determine the proximity of a UE 101 to the intersection where a navigation maneuver must take place. In doing so, the control logic 301 and proximity module 307 may subtract the context of the UE 101 from the location of the maneuver as designated by the application information.

In one embodiment, the control logic 301 and threshold module 309 may determine various triggers, or thresholds, between the proximity and the location of the application information. For example if the control logic 301 and proximity module 307 determine that a user is 5 miles away from a designated intersection, the threshold module 309 may determine 1 mile remaining as a threshold, then 300 feet remaining as another threshold. These thresholds may then signify where the necessity to present the application information overrides audio sampling for gaps in conversation. The thresholds may also cause a modification of the presentation. As previously discussed, the presentation may be abbreviated as a user nears the location for a navigational maneuver. In other words, an application 111 may configure presentations such that presentations vary depending on a user's context relative to commands in the applications 111. The interaction between the control logic 201, threshold module 309, and application 111 may determine the presentation of application information.

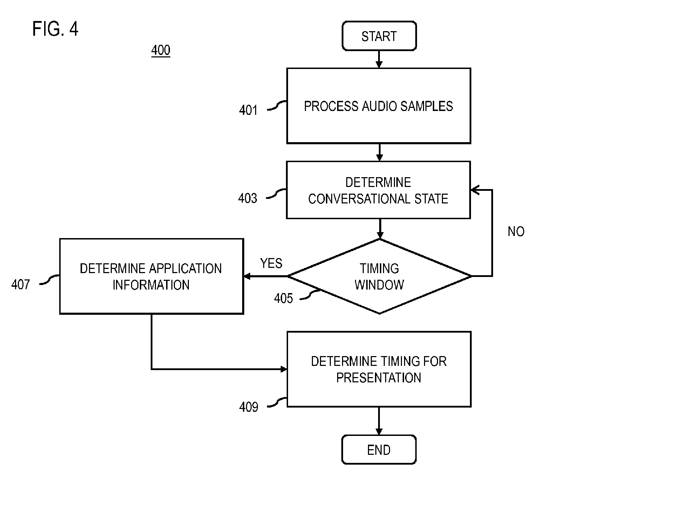

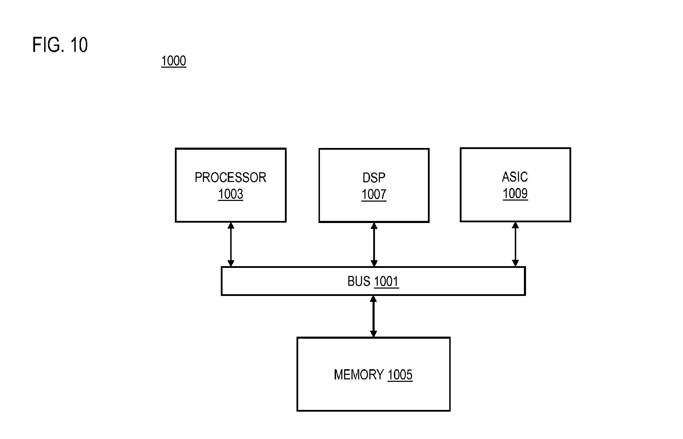

FIG. 4 is a flowchart of a process for timing application information presentation based on audio patterns, according to one embodiment. In one embodiment, the audio platform 107 performs the process 400 and is implemented in, for instance, a chip set including a processor and a memory as shown in FIG. 10. In step 401, the control logic 201 may process and/or facilitate a processing of one or more audio samples to determine a conversational state of one or more users and determining a timing for at least one presentation of application information on a device (steps 401 and 403). For example, the control logic 201 may determine that one or more users are speaking and infer a conversational state: active. If the decibel level is high, the control logic 201 may assign the conversational state as "excited." Where there is little to no talking, the control logic 201 may determine that the conversational state is at a gap in conversation. For instance, a sudden drop in decibel level and imply a gap in conversation. Given the conversational state, the control logic 201 may time the presentation to occur within a timing window. In one embodiment, step 401 further includes processing and/or facilitating a processing of the one or more audio samples to determine media playback information, ambient noise information, user activity information, or a combination thereof, wherein the timing for the at least one presentation of the application information is based, at least in part, on the media playback information, the ambient noise information, the user activity information, or a combination thereof.

Then, the control logic 201 may use the processing of the audio samples to determine that the at least one presentation of the application information is associated with a timing window and determine the timing of the at least one presentation of the application information so that the at least one presentation of the application information occurs within the timing window (steps 405-409). For example, the control logic 201 may identify a gap in conversation as a timing window and time the presentation of the application to occur during the gap in conversation.

In one embodiment, the application information includes, at least in part, navigation guidance information, the method further comprising: determining the timing of the at least one presentation based, at least in part, on proximity to a navigation maneuver associated with the navigation guidance information. For example, step 407 may include application information being navigation directions, where the navigation directions need to be announced to a driver prior to the location where the direction must take place. In one scenario, this entails announcing the navigation direction to make a right turn before the intersection where the turn must occur.

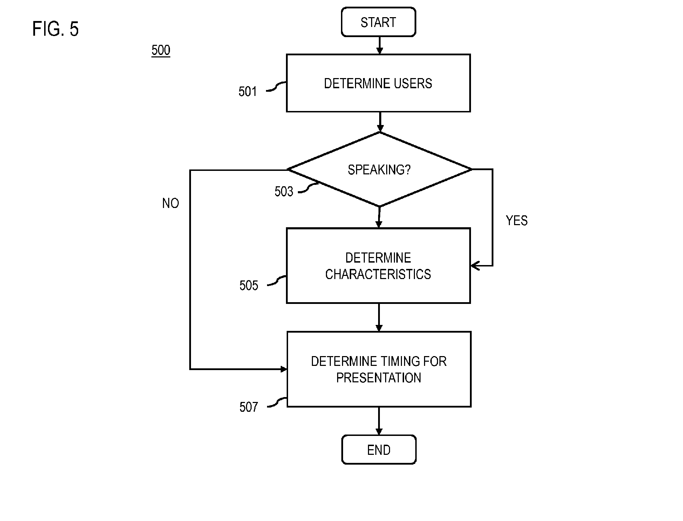

FIG. 5 is a flowchart of a process for determining the conversational state, according to one embodiment. In one embodiment, the audio platform 107 performs the process 500 and is implemented in, for instance, a chip set including a processor and a memory as shown in FIG. 10. Process 500 involves the control logic 201 determining that the conversational state indicates, at least in part, that the one or more users are not speaking and determining the timing so that the presentation of the application information is performed during the conversational state. For example, the control logic 201 may execute step 501 may of determining users. In one scenario, this may involve determining interaction of one UE 101a with another UE 101n, determining that use of the phone function of a UE 101a, voice recognition, or a combination thereof. Then, step 503 may include detecting whether the users are speaking. In one scenario, this may involve detecting decibel level, voice activity detection (VAD), or a combination thereof.

In one embodiment, the process may include an audio capture stream of the ongoing conversation where the control logic 201 may perform step 505 of processing the audio capture stream determine one or more characteristics associated with the user's mood, location, conversation content, conversation participants, or a combination thereof, wherein the presentation for the application information is based, at least in part, on the one or more characteristics (steps 505-507). In such a case, presentation for application information then takes into account not only when there is a gap in conversation, but also accounts for other factors that govern a timing to present the application information. Step 505 may include parsing audio samples with voice recognition, tone analysis, substantive content of the conversation, or a combination thereof. Step 505 may also consider physical location of the user. For example, control logic 201 may alter the timing of the presentation of application information if the user found to be in a library or conference room.

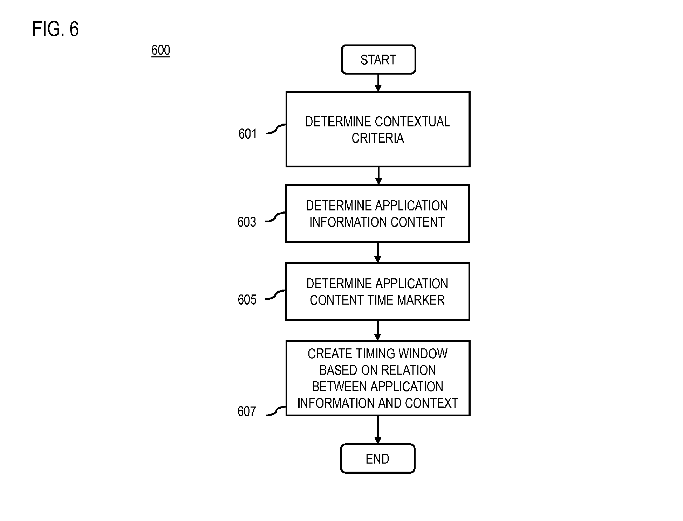

FIG. 6 is a flowchart of a process for determining the timing window, according to one embodiment. In one embodiment, the time platform 109 performs the process 600 and is implemented in, for instance, a chip set including a processor and a memory as shown in FIG. 10. In one embodiment, the control logic 301 may determine the timing window based, at least in part, on one or more contextual criteria (step 601). In one embodiment, this may include determining the application information content (step 603) and determining a time marker for the application content (step 605). For example, if the application content includes navigation directions such as telling a user to turn left at a certain intersection, the control logic 301 may determine a timing window for the application content based on how far the user is from the intersection, or the amount of time the user may take before he reaches the intersection (given the user's speed). For example, the timing window may be based on the contextual criteria wherein the one or more contextual criteria include, at least in part, one or more temporal criteria, one or more distance criteria, or a combination thereof. Then, the control logic 301 may create the timing window based on the relation between the application information and context (step 607).

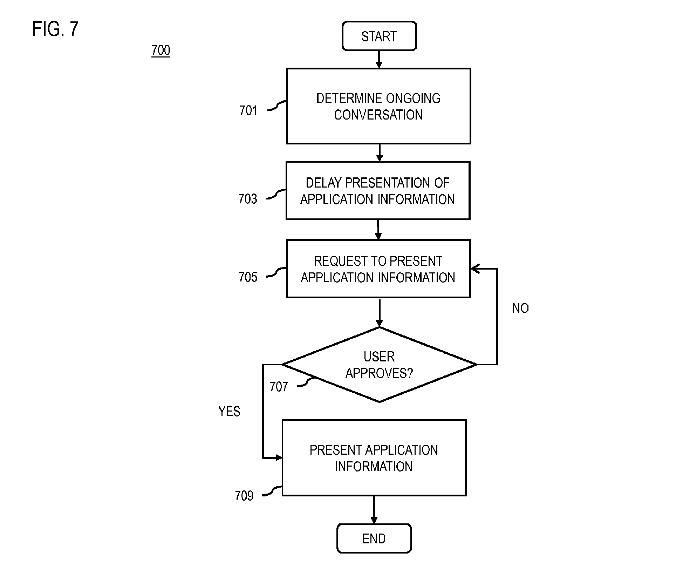

FIG. 7 is a flowchart of a process for determining the timing relative to the timing window, according to one embodiment. In one embodiment, the time platform 109 performs the process 700 and is implemented in, for instance, a chip set including a processor and a memory as shown in FIG. 10. In one embodiment, the control logic 301 may determine that the conversations take indicates an ongoing conversation among the one or more users (step 701). Then, the control logic 301 may determine the timing wherein the determined timing for the at least one presentation of the application information includes, at least in part, a delay in light at least one presentation, the method further comprising: causing, at least in part, a presentation of a message indicating the delay (step 703).

In one embodiment, the control logic 301 may then process and/or facilitate a processing of an audio capture stream of the ongoing conversation to determine at least one point in the conversation to cause, at least in part, a presentation of a request (step 705), wherein the request presents an option for user approval to initiate the at least one presentation of the application information (step 707 and step 709). For example, the control logic 301 may determine that a user must make a turn in 5 miles. The control logic 301 may sense that it must give the direction but find that a user is in the middle of a conversation. The control logic 301 may then delay giving the direction until the conversation abates. In one embodiment, the control logic 301 may cause a notification of some sort to indicate that a direction is available. For example, the notification may include a symbol appearing on the user interface or some vibration to show that a presentation of application information is available, but being delayed. The user then has the option to note the notification and pause his conversation or start to conclude part of the conversation to permit the presentation of application information. In another instance, the notification may include a request where the control logic 301 gives the user an option for approval to initiate presentation, such as prompting the user to push a flashing button.

In another embodiment, the control logic 301 may cause a modification in content of the presentation of application information based, at least in part, on the timing. For example, as the timing window gets smaller, the control logic 301 may cause the presentation to be increasingly abbreviated versions of the application information. For instance, application information may include, "Turn right in 5 miles at K Street Northwest." Where the user is 10 miles from the intersection where he should turn, the presentation would include this application information. As the presentation is delayed, however, where the user is 1 mile away, the control logic 301 may cause the presentation to be only, "Turn right at K Street." If the user is less than 500 feet away, the control logic 301 may modify the presentation to, "Turn right."

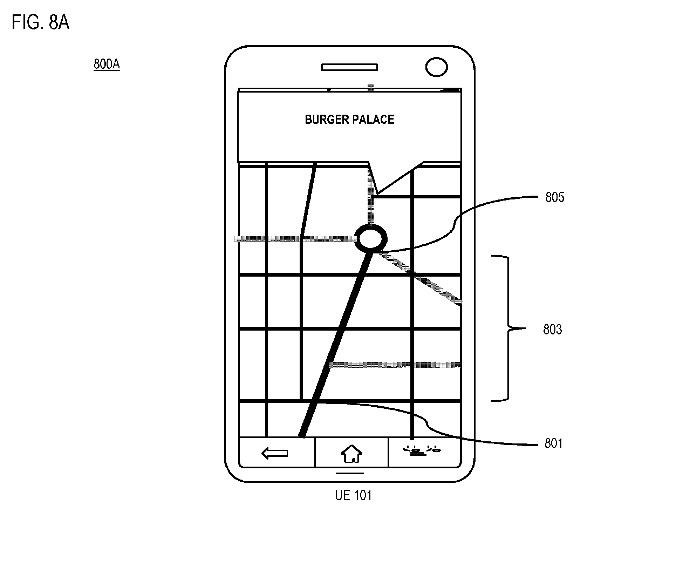

FIGs. 8A-8C are diagrams of user interfaces utilized in the processes of FIG. 4, according to various embodiments. For one embodiment, display 800A of FIG. 8A shows the timing window and time or distance remaining before a maneuver must occur. For example, point 801 may be where the system 100 detects that a navigational maneuver is approaching within the context of the application 111 navigation guidance information. Then, segment 803 may display the timing window from where a navigational maneuver is approaching, to where the maneuver must occur. In one embodiment, the segment 803 may be colored to distinguish it from other possible routes. In one embodiment, presentation of the maneuver may occur any time the system 100 determines a 3-second "inactive" conversational state when the user is traveling along segment 803. Point 805 may be where the maneuver must take place. Thus, the timing window is the temporal and/or spatial distance between point 801 or the user's location, and point 805.

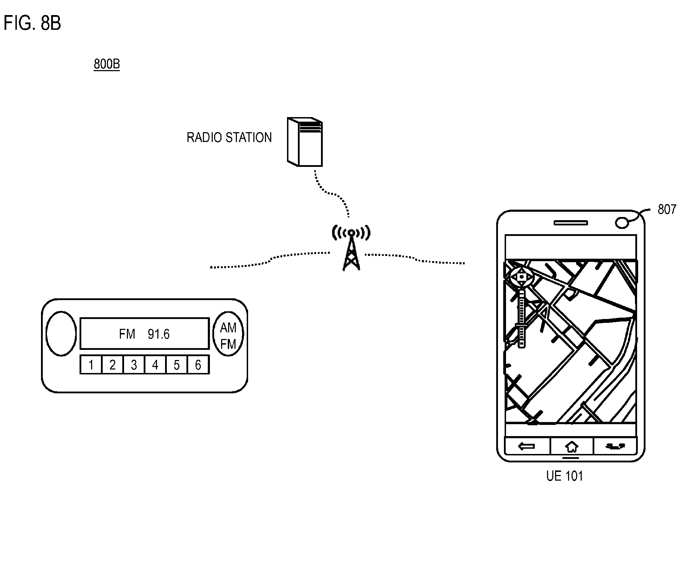

FIG. 8B is a diagram 800B showing an indication for the user that a presentation of application information is available. For example, light 807 may flash or turn on where the system 100 detects an active conversational state and application information pending. This way, the user has notice to pause or bring the conversation to a natural pause to allow for the presentation.

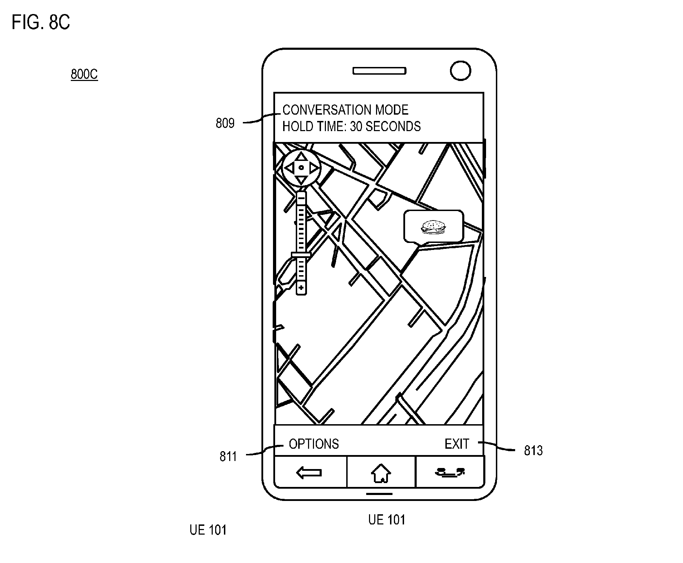

FIG. 8C is a diagram of display 800C requesting user approval to initiate presentation. In one embodiment, message box 809 may indicate that a presentation is on hold, including the time that it has been delayed due to the detected conversational state. The message box 809 may also include a countdown to when the message will be presented, regardless of conversation mode or a countdown to when the user reaches the maneuver, even if the presentation is not given. In one embodiment, the user approval request includes buttons 811 and 813. Button 811 may give the user options including presenting the application information regardless of conversational state, lowering the volume of the presentation, presenting an abbreviated form of the application information, putting the message box 809 on "snooze" to delay the presentation for a set time, etc. Alternately, button 813 may permit the user to exit from the screen, returning to static options of either presenting information independently of conversational state. This would entail presenting information over conversation or not using presenting the application information in audio form.

The processes described herein for timing application information presentation based on audio patterns may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

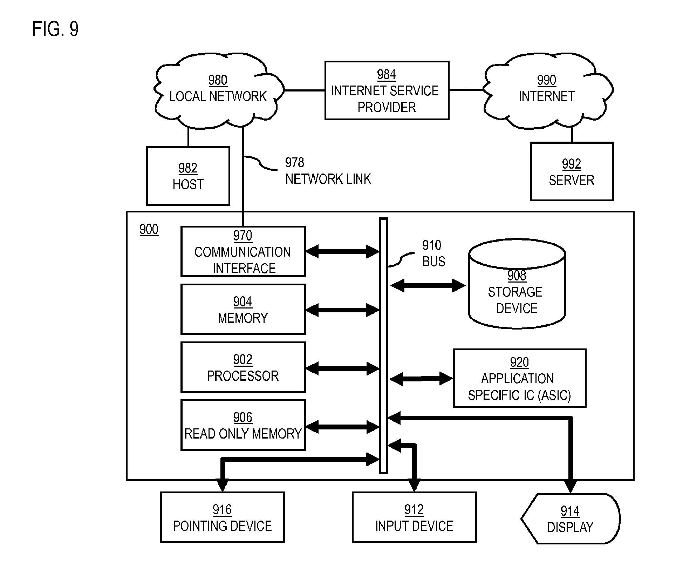

FIG. 9 illustrates a computer system 900 upon which an embodiment of the invention may be implemented. Although computer system 900 is depicted with respect to a particular device or equipment, it is contemplated that other devices or equipment (e.g., network elements, servers, etc.) within FIG. 9 can deploy the illustrated hardware and components of system 900. Computer system 900 is programmed (e.g., via computer program code or instructions) to time application information presentation based on audio patterns as described herein and includes a communication mechanism such as a bus 910 for passing information between other internal and external components of the computer system 900. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 900, or a portion thereof, constitutes a means for performing one or more steps of timing application information presentation based on audio patterns.

A bus 910 includes one or more parallel conductors of information so that information is transferred quickly among devices coupled to the bus 910. One or more processors 902 for processing information are coupled with the bus 910.

A processor (or multiple processors) 902 performs a set of operations on information as specified by computer program code related to timing application information presentation based on audio patterns. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 910 and placing information on the bus 910. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 902, such as a sequence of operation codes, constitute processor instructions, also called computer system instructions or, simply, computer instructions. Processors may be implemented as mechanical, electrical, magnetic, optical, chemical, or quantum components, among others, alone or in combination.

Computer system 900 also includes a memory 904 coupled to bus 910. The memory 904, such as a random access memory (RAM) or any other dynamic storage device, stores information including processor instructions for timing application information presentation based on audio patterns. Dynamic memory allows information stored therein to be changed by the computer system 900. RAM allows a unit of information stored at a location called a memory address to be stored and retrieved independently of information at neighboring addresses. The memory 904 is also used by the processor 902 to store temporary values during execution of processor instructions. The computer system 900 also includes a read only memory (ROM) 906 or any other static storage device coupled to the bus 910 for storing static information, including instructions, that is not changed by the computer system 900. Some memory is composed of volatile storage that loses the information stored thereon when power is lost. Also coupled to bus 910 is a non-volatile (persistent) storage device 908, such as a magnetic disk, optical disk or flash card, for storing information, including instructions, that persists even when the computer system 900 is turned off or otherwise loses power.

Information, including instructions for timing application information presentation based on audio patterns, is provided to the bus 910 for use by the processor from an external input device 912, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 900. Other external devices coupled to bus 910, used primarily for interacting with humans, include a display device 914, such as a cathode ray tube (CRT), a liquid crystal display (LCD), a light emitting diode (LED) display, an organic LED (OLED) display, a plasma screen, or a printer for presenting text or images, and a pointing device 916, such as a mouse, a trackball, cursor direction keys, or a motion sensor, for controlling a position of a small cursor image presented on the display 914 and issuing commands associated with graphical elements presented on the display 914, and one or more camera sensors 994 for capturing, recording and causing to store one or more still and/or moving images (e.g., videos, movies, etc.) which also may comprise audio recordings. In some embodiments, for example, in embodiments in which the computer system 900 performs all functions automatically without human input, one or more of external input device 912, display device 914 and pointing device 916 may be omitted.

In the illustrated embodiment, special purpose hardware, such as an application specific integrated circuit (ASIC) 920, is coupled to bus 910. The special purpose hardware is configured to perform operations not performed by processor 902 quickly enough for special purposes. Examples of ASICs include graphics accelerator cards for generating images for display 914, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 900 also includes one or more instances of a communications interface 970 coupled to bus 910. Communication interface 970 provides a one-way or two-way communication coupling to a variety of external devices that operate with their own processors, such as printers, scanners and external disks. In general the coupling is with a network link 978 that is connected to a local network 980 to which a variety of external devices with their own processors are connected. For example, communication interface 970 may be a parallel port or a serial port or a universal serial bus (USB) port on a personal computer. In some embodiments, communications interface 970 is an integrated services digital network (ISDN) card or a digital subscriber line (DSL) card or a telephone modem that provides an information communication connection to a corresponding type of telephone line. In some embodiments, a communication interface 970 is a cable modem that converts signals on bus 910 into signals for a communication connection over a coaxial cable or into optical signals for a communication connection over a fiber optic cable. As another example, communications interface 970 may be a local area network (LAN) card to provide a data communication connection to a compatible LAN, such as Ethernet. Wireless links may also be implemented. For wireless links, the communications interface 970 sends or receives or both sends and receives electrical, acoustic or electromagnetic signals, including infrared and optical signals, that carry information streams, such as digital data. For example, in wireless handheld devices, such as mobile telephones like cell phones, the communications interface 970 includes a radio band electromagnetic transmitter and receiver called a radio transceiver. In certain embodiments, the communications interface 970 enables connection to the communication network 105 for timing application information presentation based on audio patterns to the UE 101.

The term "computer-readable medium" as used herein refers to any medium that participates in providing information to processor 902, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 908. Volatile media include, for example, dynamic memory 904. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 920.

Network link 978 typically provides information communication using transmission media through one or more networks to other devices that use or process the information. For example, network link 978 may provide a connection through local network 980 to a host computer 982 or to equipment 984 operated by an Internet Service Provider (ISP). ISP equipment 984 in turn provides data communication services through the public, world-wide packet-switching communication network of networks now commonly referred to as the Internet 990.

A computer called a server host 992 connected to the Internet hosts a process that provides a service in response to information received over the Internet. For example, server host 992 hosts a process that provides information representing video data for presentation at display 914. It is contemplated that the components of system 900 can be deployed in various configurations within other computer systems, e.g., host 982 and server 992.

At least some embodiments of the invention are related to the use of computer system 900 for implementing some or all of the techniques described herein. According to one embodiment of the invention, those techniques are performed by computer system 900 in response to processor 902 executing one or more sequences of one or more processor instructions contained in memory 904. Such instructions, also called computer instructions, software and program code, may be read into memory 904 from another computer-readable medium such as storage device 908 or network link 978. Execution of the sequences of instructions contained in memory 904 causes processor 902 to perform one or more of the method steps described herein. In alternative embodiments, hardware, such as ASIC 920, may be used in place of or in combination with software to implement the invention. Thus, embodiments of the invention are not limited to any specific combination of hardware and software, unless otherwise explicitly stated herein.

The signals transmitted over network link 978 and other networks through communications interface 970, carry information to and from computer system 900. Computer system 900 can send and receive information, including program code, through the networks 980, 990 among others, through network link 978 and communications interface 970. In an example using the Internet 990, a server host 992 transmits program code for a particular application, requested by a message sent from computer 900, through Internet 990, ISP equipment 984, local network 980 and communications interface 970. The received code may be executed by processor 902 as it is received, or may be stored in memory 904 or in storage device 908 or any other non-volatile storage for later execution, or both. In this manner, computer system 900 may obtain application program code in the form of signals on a carrier wave.

Various forms of computer readable media may be involved in carrying one or more sequence of instructions or data or both to processor 902 for execution. For example, instructions and data may initially be carried on a magnetic disk of a remote computer such as host 982. The remote computer loads the instructions and data into its dynamic memory and sends the instructions and data over a telephone line using a modem. A modem local to the computer system 900 receives the instructions and data on a telephone line and uses an infra-red transmitter to convert the instructions and data to a signal on an infra-red carrier wave serving as the network link 978. An infrared detector serving as communications interface 970 receives the instructions and data carried in the infrared signal and places information representing the instructions and data onto bus 910. Bus 910 carries the information to memory 904 from which processor 902 retrieves and executes the instructions using some of the data sent with the instructions. The instructions and data received in memory 904 may optionally be stored on storage device 908, either before or after execution by the processor 902.

FIG. 10 illustrates a chip set or chip 1000 upon which an embodiment of the invention may be implemented. Chip set 1000 is programmed to timing application information presentation based on audio patterns as described herein and includes, for instance, the processor and memory components described with respect to FIG. 9 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 1000 can be implemented in a single chip. It is further contemplated that in certain embodiments the chip set or chip 1000 can be implemented as a single "system on a chip." It is further contemplated that in certain embodiments a separate ASIC would not be used, for example, and that all relevant functions as disclosed herein would be performed by a processor or processors. Chip set or chip 1000, or a portion thereof, constitutes a means for performing one or more steps of providing user interface navigation information associated with the availability of functions. Chip set or chip 1000, or a portion thereof, constitutes a means for performing one or more steps of timing application information presentation based on audio patterns.

In one embodiment, the chip set or chip 1000 includes a communication mechanism such as a bus 1001 for passing information among the components of the chip set 1000. A processor 1003 has connectivity to the bus 1001 to execute instructions and process information stored in, for example, a memory 1005. The processor 1003 may include one or more processing cores with each core configured to perform independently. A multi-core processor enables multiprocessing within a single physical package. Examples of a multi-core processor include two, four, eight, or greater numbers of processing cores. Alternatively or in addition, the processor 1003 may include one or more microprocessors configured in tandem via the bus 1001 to enable independent execution of instructions, pipelining, and multithreading. The processor 1003 may also be accompanied with one or more specialized components to perform certain processing functions and tasks such as one or more digital signal processors (DSP) 1007, or one or more application-specific integrated circuits (ASIC) 1009. A DSP 1007 typically is configured to process real-world signals (e.g., sound) in real time independently of the processor 1003. Similarly, an ASIC 1009 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 1000 includes merely one or more processors and some software and/or firmware supporting and/or relating to and/or for the one or more processors.

The processor 1003 and accompanying components have connectivity to the memory 1005 via the bus 1001. The memory 1005 includes both dynamic memory (e.g., RAM, magnetic disk, writable optical disk, etc.) and static memory (e.g., ROM, CD-ROM, etc.) for storing executable instructions that when executed perform the inventive steps described herein to time application information presentation based on audio patterns. The memory 1005 also stores the data associated with or generated by the execution of the inventive steps.

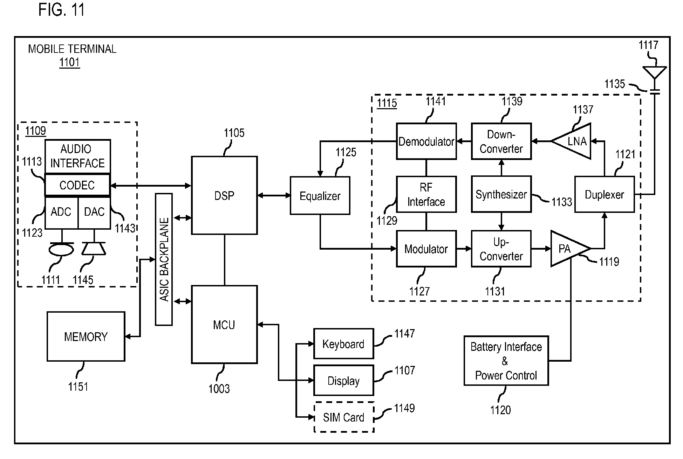

FIG. 11 is a diagram of exemplary components of a mobile terminal (e.g., handset) for communications, which is capable of operating in the system of FIG. 1, according to one embodiment. In some embodiments, mobile terminal 1101, or a portion thereof, constitutes a means for performing one or more steps of timing application information presentation based on audio patterns. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1103, a Digital Signal Processor (DSP) 1105, and a receiver/transmitter unit including a microphone gain control unit and a speaker gain control unit. A main display unit 1107 provides a display to the user in support of various applications and mobile terminal functions that perform or support the steps of timing application information presentation based on audio patterns. The display 1107 includes display circuitry configured to display at least a portion of a user interface of the mobile terminal (e.g., mobile telephone). Additionally, the display 1107 and display circuitry are configured to facilitate user control of at least some functions of the mobile terminal. An audio function circuitry 1109 includes a microphone 1111 and microphone amplifier that amplifies the speech signal output from the microphone 1111. The amplified speech signal output from the microphone 1111 is fed to a coder/decoder (CODEC) 1113.

A radio section 1115 amplifies power and converts frequency in order to communicate with a base station, which is included in a mobile communication system, via antenna 1117. The power amplifier (PA) 1119 and the transmitter/modulation circuitry are operationally responsive to the MCU 1103, with an output from the PA 1119 coupled to the duplexer 1121 or circulator or antenna switch, as known in the art. The PA 1119 also couples to a battery interface and power control unit 1120.

In use, a user of mobile terminal 1101 speaks into the microphone 1111 and his or her voice along with any detected background noise is converted into an analog voltage. The analog voltage is then converted into a digital signal through the Analog to Digital Converter (ADC) 1123. The control unit 1103 routes the digital signal into the DSP 1105 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1125 for compensation of any frequency-dependent impairments that occur during transmission though the air such as phase and amplitude distortion. After equalizing the bit stream, the modulator 1127 combines the signal with a RF signal generated in the RF interface 1129. The modulator 1127 generates a sine wave by way of frequency or phase modulation. In order to prepare the signal for transmission, an up-converter 1131 combines the sine wave output from the modulator 1127 with another sine wave generated by a synthesizer 1133 to achieve the desired frequency of transmission. The signal is then sent through a PA 1119 to increase the signal to an appropriate power level. In practical systems, the PA 1119 acts as a variable gain amplifier whose gain is controlled by the DSP 1105 from information received from a network base station. The signal is then filtered within the duplexer 1121 and optionally sent to an antenna coupler 1135 to match impedances to provide maximum power transfer. Finally, the signal is transmitted via antenna 1117 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1101 are received via antenna 1117 and immediately amplified by a low noise amplifier (LNA) 1137. A down-converter 1139 lowers the carrier frequency while the demodulator 1141 strips away the RF leaving only a digital bit stream. The signal then goes through the equalizer 1125 and is processed by the DSP 1105. A Digital to Analog Converter (DAC) 1143 converts the signal and the resulting output is transmitted to the user through the speaker 1145, all under control of a Main Control Unit (MCU) 1103 which can be implemented as a Central Processing Unit (CPU).

The MCU 1103 receives various signals including input signals from the keyboard 1147. The keyboard 1147 and/or the MCU 1103 in combination with other user input components (e.g., the microphone 1111) comprise a user interface circuitry for managing user input. The MCU 1103 runs a user interface software to facilitate user control of at least some functions of the mobile terminal 1101 to timing application information presentation based on audio patterns. The MCU 1103 also delivers a display command and a switch command to the display 1107 and to the speech output switching controller, respectively. Further, the MCU 1103 exchanges information with the DSP 1105 and can access an optionally incorporated SIM card 1149 and a memory 1151. In addition, the MCU 1103 executes various control functions required of the terminal. The DSP 1105 may, depending upon the implementation, perform any of a variety of conventional digital processing functions on the voice signals. Additionally, DSP 1105 determines the background noise level of the local environment from the signals detected by microphone 1111 and sets the gain of microphone 1111 to a level selected to compensate for the natural tendency of the user of the mobile terminal 1101.

The CODEC 1113 includes the ADC 1123 and DAC 1143. The memory 1151 stores various data including call incoming tone data and is capable of storing other data including music data received via, e.g., the global Internet. The software module could reside in RAM memory, flash memory, registers, or any other form of writable storage medium known in the art. The memory device 1151 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1149 carries, for instance, important information, such as the cellular phone number, the carrier supplying service, subscription details, and security information. The SIM card 1149 serves primarily to identify the mobile terminal 1101 on a radio network. The card 1149 also contains a memory for storing a personal telephone number registry, text messages, and user specific mobile terminal settings.

Further, one or more camera sensors 1153 may be incorporated onto the mobile station 1101 wherein the one or more camera sensors may be placed at one or more locations on the mobile station. Generally, the camera sensors may be utilized to capture, record, and cause to store one or more still and/or moving images (e.g., videos, movies, etc.) which also may comprise audio recordings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising facilitating a processing of and/or processing (1) data and/or (2) information and/or (3) at least one signal, the (1) data and/or (2) information and/or (3) at least one signal based, at least in part, on the following:
processing and/or facilitating a processing of one or more audio samples to determine a conversational state of one or more users; and
determining a timing for at least one presentation of application information on a device associated with at least one of the one or more users based, at least in part, on the conversational state.

2. A method of claim 1, wherein the application information includes, at least in part, navigation guidance information, the method further comprising:
determining the timing of the at least one presentation based, at least in part, on proximity to a navigation maneuver associated with the navigation guidance information.

3. A method of claim 1, wherein the (1) data and/or (2) information and/or (3) at least one signal are further based, at least in part, on the following:
determining that the conversational state indicates, at least in part, that the one or more users are not speaking; and
determining the timing so that the presentation of the application information is performed during the conversational state.

4. A method of claim 1, wherein the (1) data and/or (2) information and/or (3) at least one signal are further based, at least in part, on the following:
determining that the at least one presentation of the application information is associated with a timing window; and
determining the timing of the at least one presentation of the application information so that the at least one presentation of the application information occurs within the timing window.

5. A method of claim 1, wherein the (1) data and/or (2) information and/or (3) at least one signal are further based, at least in part, on the following:
determining that the conversation state indicates an ongoing conversation among the one or more users;
processing and/or facilitating a processing of an audio capture stream of the ongoing conversation to determine at least one point in the conversation to cause, at least in part, a presentation of a request,
wherein the request presents an option for user approval to initiate the at least one presentation of the application information.

6. A method of claim 5, wherein the (1) data and/or (2) information and/or (3) at least one signal are further based, at least in part, on the following:
processing the audio capture stream to determine one or more characteristics associated with the user's mood, location, conversation content, conversation participants, or a combination thereof,
wherein the presentation of the application information is based, at least in part, on the one or more characteristics.

7. A method of claim 1, wherein the (1) data and/or (2) information and/or (3) at least one signal are further based, at least in part, on the following:
processing and/or facilitating a processing of the one or more audio samples to determine media playback information, ambient noise information, user activity information, or a combination thereof,
wherein the timing for the at least one presentation of the application information is further based, at least in part, on the media playback information, the ambient noise information, the user activity information, or a combination thereof.

8. An apparatus comprising:
at least one processor; and
at least one memory including computer program code for one or more programs,
the at least one memory and the computer program code configured to, with the at least one processor, cause the apparatus to perform at least the following,
process and/or facilitate a processing of one or more audio samples to determine a conversational state of one or more users; and
determine a timing for at least one presentation of application information on a device associated with at least one of the one or more users based, at least in part, on the conversational state.

9. An apparatus of claim 8, wherein the apparatus is further caused to:
determine that the conversational state indicates, at least in part, that the one or more users are not speaking; and
determine the timing so that the presentation of the application information is performed during the conversational state.

10. An apparatus of claim 8, wherein the apparatus is further caused to:
determine that the at least one presentation of the application information is associated with a timing window; and
determine the timing of the at least one presentation of the application information so that the at least one presentation of the application information occurs within the timing window.

11. An apparatus of claim 8, wherein the apparatus is further caused to:
determine the timing window based, at least in part, on one or more contextual criteria,
wherein the one or more contextual criteria include, at least in part, one or more temporal criteria, one or more distance criteria, or a combination thereof.

12. An apparatus of claim 8, wherein the apparatus is further caused to:
determine that the conversation state indicates an ongoing conversation among the one or more users;
process and/or facilitate a processing of an audio capture stream of the ongoing conversation to determine at least one point in the conversation to cause, at least in part, a presentation of a request,
wherein the request presents an option for user approval to initiate the at least one presentation of the application information.

13. An apparatus of claim 12, wherein the apparatus is further caused to:
process the audio capture stream to determine one or more characteristics associated with the user's mood, location, conversation content, conversation participants, or a combination thereof,
wherein the presentation of the application information is based, at least in part, on the one or more characteristics.

14. An apparatus of claim 8, wherein the apparatus is further caused to:
process and/or facilitate a processing of the one or more audio samples to determine media playback information, ambient noise information, user activity information, or a combination thereof,
wherein the timing for the at least one presentation of the application information is further based, at least in part, on the media playback information, the ambient noise information, the user activity information, or a combination thereof.
